# EUROPEAN PATENT APPLICATION

(11) **EP 1 844 957 A1**
(43) Date of publication of application: **17.10.2007**
(21) Application number: 06712864.5
(22) Date of filing: 02.02.2006
(51) Int. Cl.: B60C 15/06

(54) **PNEUMATIC TIRE**

(30) Priority: 02.02.2005 JP 2005026543
(71) Applicant: Bridgestone Corporation, Tokyo 104-8340 (JP)
(72) Inventor: KURITA, Keiichi, Kodaira-shi Tokyo 187-8531 (JP)
(74) Representative: Whalley, Kevin
(86) International application number: PCT/JP2006/301721
(87) International publication number: WO 2006/082869

(57) **Abstract**

A carcass layer (4) is provided, in which a plurality of cords folded so as to be wound around an annular bead core (2) are coated with rubber. On an outside of this carcass layer (4), a wire chafer (7) in which a plurality of cords are coated with rubber is provided. An outer end portion (7a) in a tire width direction of the wire chafer (7) is extended to an outside in a tire radial direction more than a folded end portion (4a) of the carcass layer (4). An interval between each cord of a folded portion (4b) of the carcass layer (4) and each adjacent cord of the wire chafer (7) thereto is formed so as to be widened toward the outside in the tire radial direction. An inner end portion (7b) in the tire width direction of the wire chafer (7) is located on an outside in a tire radial direction from an intersection (11) of a normal (10) suspended from a curvature center (O) of a flange (9) to an inner end portion (4c) in the tire width direction of the carcass layer (4) and of the inner end portion (4c) in the tire width direction.

## Description

### TECHNICAL FIELD

The present invention relates to a pneumatic tire that has a wire chafer in which a plurality of cords are coated with rubber, on an outside of a carcass layer folded along a bead core.

### BACKGROUND ART

Heretofore, in a pneumatic tire, a wire chafer in which steel cords are coated with rubber has been disposed on an outside of a carcass layer folded along a bead core in order to use the pneumatic tire as one for a heavy load (refer to Patent Document 1). A larger load is applied to the pneumatic tire for the heavy load than to a tire of a passenger car, and the like, and a burden to a bead portion of such a heavy duty pneumatic tire is large. Accordingly, the wire chafer as described above is provided, whereby durability of the bead portion is enhanced.

[Patent Document 1] Japanese Patent Laid-Open Publication No. H7-164837

### DISCLOSURE OF THE INVENTION

### Problem to be Solved by the Invention

However, in accordance with the wire chafer as described above, there has been a problem that a crack sometimes occurs on an end portion of the carcass layer folded along the bead core, leading to insufficiency of durability in the bead portion.

In this connection, in consideration for the above-described problem, it is an object of the present invention to provide a pneumatic tire capable of enhancing the durability in the bead portion.

### Means for Solving the Problem

In order to achieve the above-described object, an aspect of the present invention provides a pneumatic tire, including: annular bead cores individually provided in a pair of bead portions; a carcass layer extended between the bead cores, in which a plurality of codes folded so as to be wound around the bead cores are coated with rubber; and wire chafers provided on outsides of the carcass layer, in which a plurality of codes are coated with rubber, wherein an outer end portion in a tire width direction of each of the wire chafers is extended to an outside in a tire radial direction more than each folded end portion of the carcass layer, a shortest distance between centers of each cord of a folded portion of the carcass layer and each adjacent cord of the wire chafer to the cord of the folded portion is formed so as to be widened toward the outside in the tire radial direction, and an inner end portion in the tire width direction of the wire chafer is located at a same position as an intersection of a normal suspended from a curvature center of a flange of a rim to an inner portion in the tire width direction of the carcass layer and of the inner portion in the tire width direction, or located on an outside in the tire radial direction from the intersection.

With such a configuration, the outer end portion in the tire width direction of the wire chafer is extended to the outside in the tire radial direction more than the folded end portion of the carcass layer, whereby the crack can be suppressed from occurring in the folded end portion of the carcass layer.

Moreover, the inner end portion in the tire width direction of the wire chafer is located at the same position as the intersection of the normal suspended from the curvature center of the flange of the rim to the inner portion in the tire width direction of the carcass layer and of the inner portion in the tire width direction, or located on the outside in the tire radial direction from the intersection. Accordingly, when a load is applied to the tire, deformation around the bead is suppressed.

Furthermore, the outer end portion in the tire width direction of the wire chafer is extended to the outside in the tire radial direction more than the folded end portion of the carcass layer, and the inner end portion in the tire width direction of the wire chafer is located at the same position as the intersection of the normal suspended from the curvature center of the flange of the rim to the inner portion in the tire width direction of the carcass layer and of the inner portion in the tire width direction, or located on the outside in the tire radial direction from the intersection. Accordingly, a highly durable bead structure can be realized.

Moreover, in a preferred embodiment of the present invention, a configuration may be adopted, in which the cord of each wire chafer, which is located on the outside in the tire radial direction more than the folded end portion of the carcass layer, is inclined with respect to a tire circumferential direction. In this case, also when the crack occurs in the outer end portion in the tire width direction of the wire chafer in place of the folded end portion, the crack occurs along the inclined cord of the wire chafer, whereby the crack is suppressed from growing linearly to a tire surface from the outer end portion in the tire width direction, thus making it possible to make the crack less likely to appear on the tire surface.

### Effect of the Invention

In accordance with the present invention, the pneumatic tire capable of enhancing the durability in the bead portion can be provided.

### BRIEF DESCRIPTION OF THE DRAWINGS

FIG. 1 is a cross-sectional view showing a bead portion of a pneumatic tire according to an embodiment of the present invention.
FIG. 2 is a characteristic chart showing a relationship between a bead durability index and a ratio of a shortest distance between cord centers of an outer end portion in a tire width direction of a wire chafer and an inner portion in the tire width direction of a carcass layer with respect to a shortest distance between cord centers of a folded end portion of the carcass layer and an inner portion in a width direction of the carcass layer in the pneumatic tire according to the embodiment of the present invention.
FIG. 3 is a characteristic chart showing a relationship between distortion in the folded end portion of the carcass layer and a shortest distance between cord centers of the folded end portion of the carcass layer and the wire chafer adjacent thereto in the pneumatic tire according to the embodiment of the present invention.
FIG. 4 is an inner portion partial side view schematically showing arrangement of the wire chafer and carcass layer of the pneumatic tire when viewed from arrow 13 of FIG. 1.
FIG. 5 is a schematic view showing a state of cracks which occur in the outer end portion of the wire chafer in the pneumatic tire according to the embodiment of the present invention.
FIG. 6 is a cross-sectional view showing a cord diameter of the wire chafers and a cord interval therebetween in the pneumatic tire according to the embodiment of the present invention.
FIG. 7 is a characteristic chart showing a relationship between the bead durability index and a ratio of the cord interval between the wire chafers with respect to the cord diameter thereof in the pneumatic tire according to the embodiment of the present invention.
FIG. 8 is a cross-sectional view showing a pneumatic tire according to another embodiment of the present invention.
FIG. 9 is a cross-sectional view showing a pneumatic tire according to still another embodiment of the present invention.

### BEST MODE FOR CARRYING OUT THE INVENTION

A description will be made below of a pneumatic tire according to this embodiment.

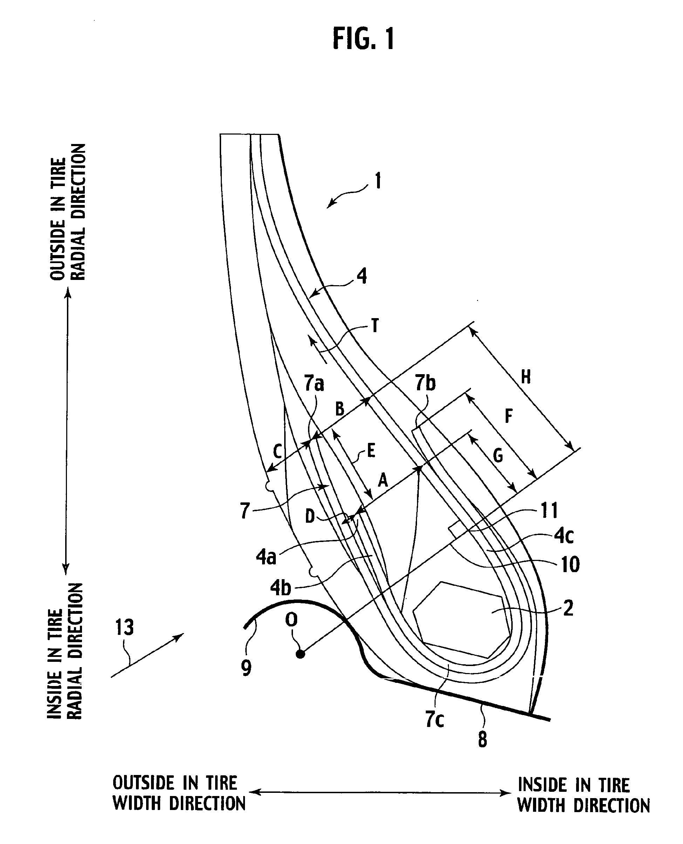

FIG. 1 is a cross-sectional view showing a bead portion of the pneumatic tire according to this embodiment.

As shown in this drawing, in a tire body 1, a carcass layer 4 is disposed to be folded in a wound manner along an outside of a bead core 2, and a wire chafer 7 is disposed on an outside of the carcass layer 4. The bead core 2 is an annular reinforcement member for fixing the tire body 1 to a rim. The wire chafer 7 is one in which a plurality of cords are coated with rubber, and is one disposed on the outside of the carcass layer 4, and for enhancing durability of the bead portion.

An outer end portion 7a in a tire width direction of the wire chafer 7 is extended to an outside in a tire radial direction more than a folded end portion 4a of the carcass layer 4. An interval between a cord of a folded portion 4b of the carcass layer 4 and the adjacent cord of the wire chafer 7 to the cord of the folded portion 4b is formed so as to be widened toward the outside in the tire radial direction.

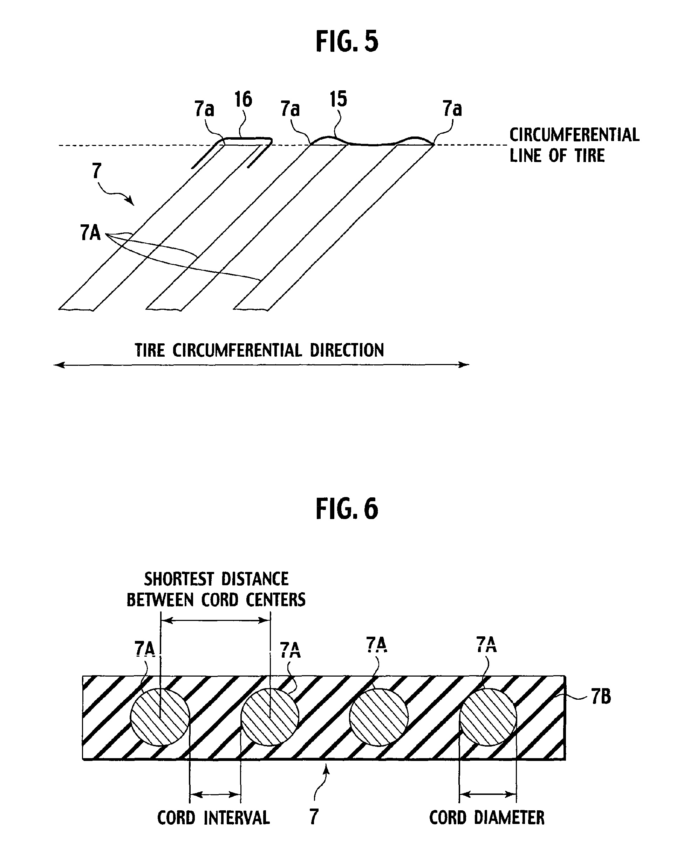

A ratio A: B, in which A is a shortest distance between cord centers of the folded end portion 4a of the carcass layer 4 and an inner portion 4c in the tire width direction of the carcass layer 4, and B is a shortest distance between cord centers of the outer end portion 7a in the tire width direction of the wire chafer 7 and the inner portion 4c in the tire width direction of the carcass layer 4, is 100: 100 ± 15 (85 to 115). Note that the shortest distance between the cord centers stands for a distance shown in FIG. 6 here.

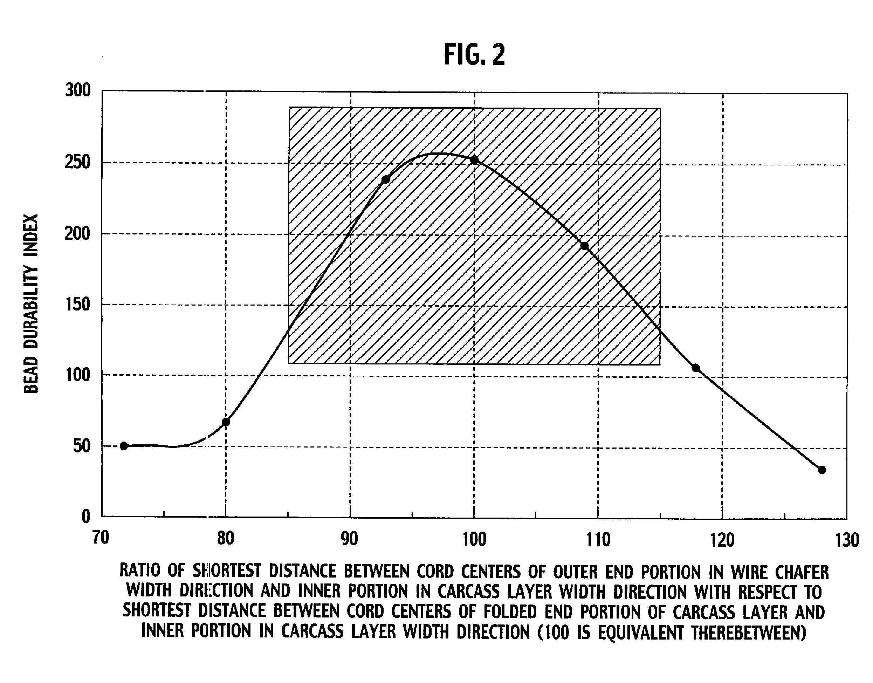

A description will be made of the reason for the above by using FIG. 2. in FIG. 2, an axis of abscissas represents the shortest distance B between the cord center of the outer end portion 7a in the tire width direction of the wire chafer 7 and the cord center of the inner portion 4c in the tire width direction of the carcass layer 4 when the shortest distance A between the cord center of the folded end portion 4a of the carcass layer 4 and the cord center of the inner portion 4c in the tire width direction of the carcass layer 4 is defined as 100. An axis of ordinates represents a bead durability index.

100 or more of the bead durability index indicates a level required by a market. From this chart, it can be said that a range (range shaded by diagonal lines) in which the ratio of the shortest distance B with respect to the shortest distance A is from 85 to 115 is a range in which the bead durability index surely exceeds 100.

Note that this bead durability index is one obtained in such a manner that the tire was actually manufactured so as to satisfy this dimension, was mounted on a drum with a diameter of 1.7 m, and was made to run at a speed of 60 km/h, a running distance until a breakdown of the tire occurred was investigated, such a market requirement level was converted into a running distance when the tire ran on the drum, and a numeric value thereof was defined as 100. Note that, with regard to a part of the data, the running distance on the drum was calculated from only a result of the running on the drum, or from a level of distortion of the outer end portion of the wire chafer 7, which was obtained by using a finite element method. Moreover, the larger numeric value of the bead durability index indicates that the durability of the bead portion is higher.

A shortest distance C from an outer surface of the tire to the cord center of the outer end portion 7a in the tire width direction of the wire chafer 7 is 6 mm or more to 10 mm or less. This is because, if the shortest distance C is smaller than 6 mm, then propagation of a crack to the outer surface of the tire is accelerated at the time when the crack occurs, and the tire is detached at an early stage as a result of being determined to be broken down. Moreover, this is because, if the shortest distance C is larger than 10 mm, then the rubber is too thick and deteriorates heat generation, and the distortion affects the outer end portion 7a in the tire width direction of the wire chafer 7 more adversely. Moreover, a shortest distance D between centers of the cord of the folded end portion 4a of the carcass layer 4 and the adjacent cord of the wire chafer 7 to the cord of the folded end portion 4a is 2 mm or more to 5 mm or less.

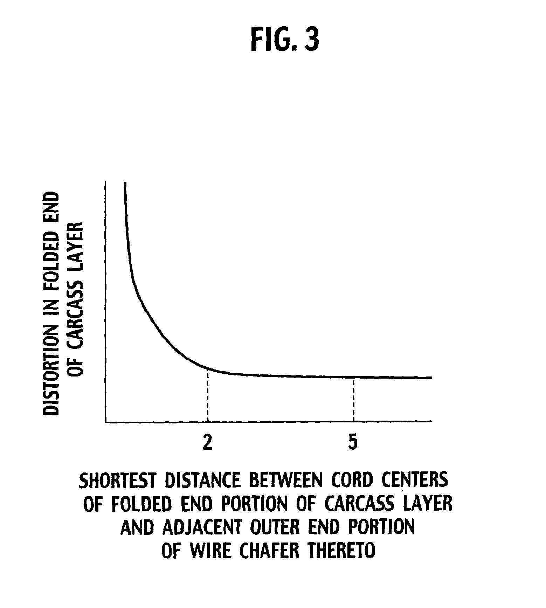

A description will be made of the reason for the above by using FIG. 3. In FIG. 3, an axis of ordinates represents the distortion in the folded end portion 4a of the carcass layer 4, and an axis of abscissas represents the shortest distance D between the centers of the cord of the folded end portion 4a of the carcass layer 4 and the cord of the wire chafer 7. A change of the distortion in the folded end portion 4a of the carcass layer 4 was obtained by using the finite element method. As apparent from this chart, when the shortest distance D between the centers of the codes becomes smaller than 2 mm, the distortion in the folded end portion 4a of the carcass layer 4 becomes large. Meanwhile, even if the shortest distance D between the centers of the codes is larger than 5 mm, the distortion in the folded end portion 4a of the carcass layer 4 hardly changes.

5 mm or more is preferable as a shortest distance E between the outer end portion 7a in the tire width direction of the wire chafer 7 and the folded end portion 4a of the carcass layer 4. This is because, when the shortest distance E is smaller than 5 mm, the end portion 7a and the end portion 4a are too close in distance to each other, and the distortion is prone to be worsened.

An inner end portion 7b in the tire width direction of the wire chafer 7 is located on the outside in the tire width direction by a distance F from an intersection 11 of a normal 10 suspended from a curvature center O of a flange 9 of a rim 8 equipped as a standard to the inner portion 4c in the tire width direction of the carcass layer 4 and of the inner portion 4c in the tire width direction. Here, for example, as described in Paragraph 0016 of Japanese Patent Laid-Open Publication No. H11-20423, a position of the intersection 11 of the normal 10 suspended from the curvature center O of the flange 9 to the inner portion 4c in the tire width direction of the carcass layer 4 and of such a tire inner portion 4c stands for a position when the air at the maximum pressure, which corresponds to the tire's maximum load capability defined in "Air Pressure - Load Capability Correspondence Table" by a standard described in the paragraph concerned, is filled into a tire-rim assembled body in which the tire is assembled to the rim as an application target thereof. However, the position of the intersection 11 is not always limited to this position. Here, as the rim equipped as the standard, one that conforms to the JATMA, TRA or ETRTO standard is used. Which of the standards the rim concerned is to conform to differs depending on a country or a region where the tire is for use.

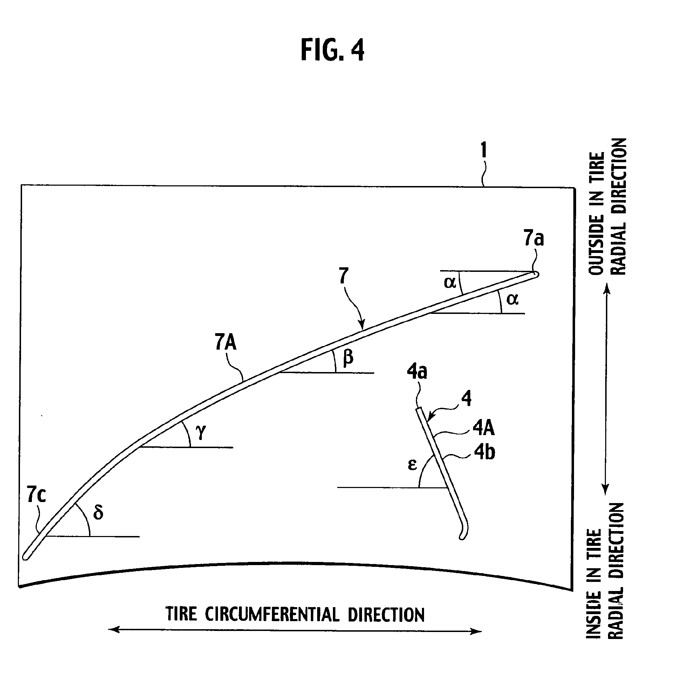

FIG. 4 is an inner portion partial side view of the tire when viewed from a direction of arrow 13 in FIG. 1, showing only one of the cords of the wire chafer 7 and only one of the cords of the carcass layer 4.

As shown in FIG. 4, an angle α of the outer end portion 7a in the tire width direction of the wire chafer 7 with respect to a tire circumferential direction of such a cord 7A is smaller than an angle δ of a bead core-adjacent potion 7c of the wire chafer 7 with respect to the tire circumferential direction.

The cord 7A of the wire chafer 7, which is located on the outside in the tire radial direction more than the folded end portion 4a of the carcass layer 4, forms the angle α of 15° or more to 35° or less with respect to the tire circumferential direction. This is because, when the angle α is smaller than 15°, a crack propagation speed of the crack that propagates along the cord from the outer end portion 7a in the tire width direction of the wire chafer 7 becomes too rapid, and the crack propagates to the folded end portion 4a rapidly, causing the early breakdown. Moreover, this is because, when the angle α is larger than 35°, the crack propagation speed becomes too slow, and such crack propagation turns to crack propagation in the circumferential direction, which is disadvantageous to the crack propagation. Specifically, both of the too rapid and too slow crack propagation speeds are not good for the bead durability.

A description will be made of the above more in detail by using FIG. 5. When the crack propagation speed becomes too slow, the cracks continue with each other in the tire circumferential direction like a crack 15, and in this case, the crack propagation is resultantly accelerated. When the angle of the cords 7A with respect to the tire circumferential direction is 15° or more to 35° or less, the crack propagates along one of the cords 7A like a crack 16, and an ideal crack propagation state is brought, where the propagation speed is slower than in the propagation in the circumferential direction.

Here, a description will be made of a cord diameter and a cord interval by using FIG. 6. In FIG. 6, the wire chafer 7 is formed by coating the plurality of cords 7A arrayed in parallel with coating rubber 7B. The cord diameter stands for a diameter on a cross section of each cord 7A. Moreover, the cord interval stands for a distance between the adjacent cords 7A.

With regard to the cords 7A of the wire chafer 7, which are located on the outside in the tire width direction more than the folded end portion 4a of the carcass layer 4, a ratio of the interval between the adjacent cords with respect to the cord diameter is 0.6 or more to 1.6 or less, the diameter of each cord is 0.7 mm or more to 1.5 mm or less, and the interval between the adjacent cords is 0.7 mm or more to 2.0 mm or less.

This is because, in the case where the diameter of each cord 7A is smaller than 0.7 mm, there is a possibility that the cords 7A may be buckled to be broken when the tire is deformed by a load or the like. Moreover, this is because, in the case where the diameter of each cord 7A is larger than 1.5 mm, the crack in each outer end portion 7a in the tire width direction is more prone to occur since strength of the cords 7A is too strong.

Moreover, this is because, in the case where the interval between the adjacent cords is smaller than 0.7 mm, an amount of the rubber between the cords is small, cushion property is poor, and accordingly, the crack comes not to go along each cord 7A of the wire chafer 7. Furthermore, this is because, in the case where the interval between the adjacent cords is larger than 2.0 mm, an amount of the cords is reduced, whereby rigidity in the bead portion falls down, and a disadvantage is brought to growth of the crack.

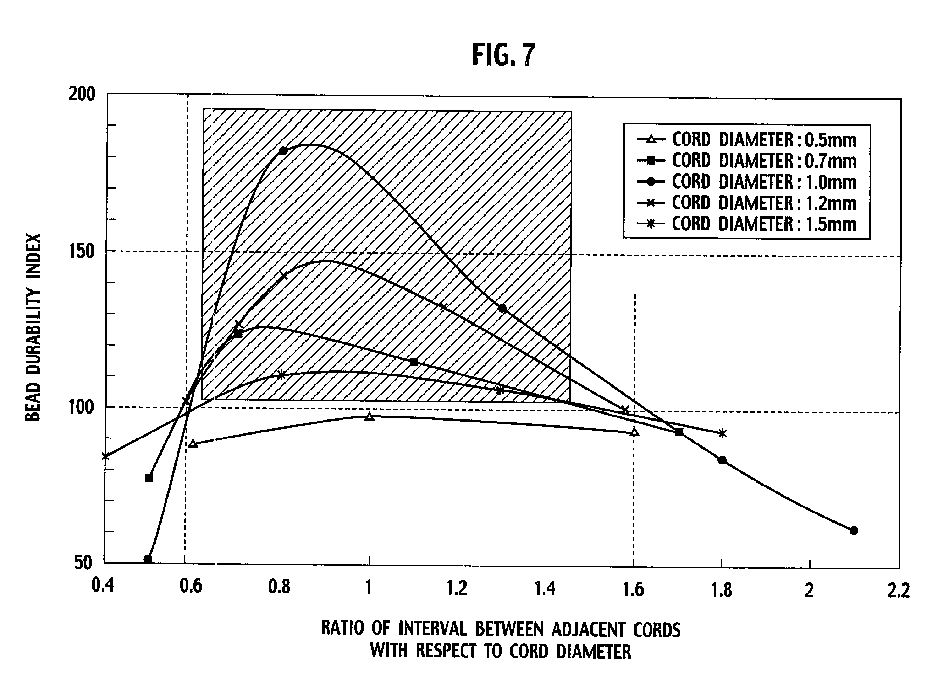

Here, a description will be made of a relationship between the bead durability index and the ratio of the interval between the adjacent cords with respect to the cord diameter by using FIG. 7. In FIG. 7, the angle of the tire outer end portion of the wire chafer 7 with respect to the tire circumferential direction is set at 25°, an axis of abscissas represents the ratio of the interval between the adjacent cords with respect to the cord diameter, and an axis of ordinates represents the bead durability index. 100 or more of the bead durability index is the index required by the market. In accordance with this chart, a range of 0.6 to 1.6 on the axis of abscissas corresponds to a range of 100 or more on the axis of ordinates. More preferably, a range shaded by diagonal lines becomes the range in which the market requirement level is satisfied. In other words, 0.7 mm or more to 1.5 mm or less of the cord diameter and 0.7 mm or more to 2.0 mm or less of such a cord interval forms a preferred range.

Note that this bead durability index is one obtained in such a manner that the tire was actually manufactured by using the cords with the above-described dimension, was mounted on the drum with a diameter of 1. 7 m, and was made to run at a speed of 60 km/h, the running distance until the breakdown occurred was investigated, the market requirement level was converted into the running distance when the tire ran on the drum, and a numeric value thereof was defined as 100. Note that, with regard to a part of the data, the running distance on the drum was calculated from only a result of the running on the drum, or from the level of the distortion of the outer end portion of the wire chafer 7, which was obtained by using the finite element method. Moreover, the larger numeric value of the bead durability index indicates that the durability of the bead portion is higher.

As shown in FIG. 4, the cord 7A of the bead core-adjacent portion 7c of the wire chafer 7 forms the angle δ of 35° or more to 55° or less with respect to the tire circumferential direction. The reason for the above is that, when the angle α of the cord 7A of the wire chafer 7, which is located on the outside in the tire radial direction more than the folded end portion 4a of the carcass layer 4, with respect to the tire circumferential direction is set as described above, the cord 7A of the bead core-adjacent portion 7c is less likely to change the angle thereof since the cord 7A is bound, and the angle 5 is necessarily set within the above-described range.

Moreover, also with regard to this portion, the ratio of the interval between the adjacent cords with respect to the cord diameter is 0.6 or more to 1.6 or less, the diameter of each cord is 0.7 mm or more to 1.5 mm or less, and the interval between the adjacent cords is 0.7 mm or more to 2.0 mm or less.

Furthermore, cord angles β and γ of intermediate portions of the wire chafer 7 with respect to the tire circumferential direction are usually become angles larger than α and smaller than δ.

Note that, though not shown, a cord angle of the inner end portion 7b in the tire width direction of the wire chafer 7 with respect to the tire width direction is 20° or more to 40° or less. The reason for the above is that, when the angle of the outer end portion 7a in the tire width direction of the wire chafer 7 with respect to the tire circumferential direction is set at 15° or more to 35° or less, the inner end portion 7b in the tire width direction of the wire chafer 7 is necessarily inclined by 20° to 40° with respect to the tire circumferential direction.

A cord 4A of the folded portion 4b of the carcass layer 4 is inclined in a reverse direction to the adjacent cord of the wire chafer 7 thereto. The reason for the above is that the distortion of the folded end portion 4a of the carcass layer 4 is improved more when the cord 4A is inclined in the reverse direction. The cord at the folded portion 4b of the carcass layer 4 forms an angle of 75° to 90° with respect to the tire circumferential direction. This is because the durability (distortion) is improved more when the cord is inclined a little from 90°. More specifically, this is because the distortion is improved more when the cord is inclined more with respect to the tire radial direction while the cord is prone to be largely distorted when the load is applied thereto in the case where such a cord angle is close to 90°.

In FIG. 1, distances from the normal 10 suspended from the curvature center O of the flange 9 to the inner portion 4c in the tire width direction of the carcass layer 4 are set as: the outer end portion 7a in the tire width direction of the wire chafer 7 (H) > the inner end portion 7b in the tire width direction of the wire chafer 7 (F) ≥ the folded end portion 4a of the carcass layer 4 (G). In such a way, the distortions in the outer end portion 7a in the tire width direction of the wire chafer 7 and the folded end portion 4a of the carcass layer 4 are reduced, thus making it possible to suppress the occurrence of the breakdown in the outer end portion 7a in the tire width direction of the tire chafer 7.

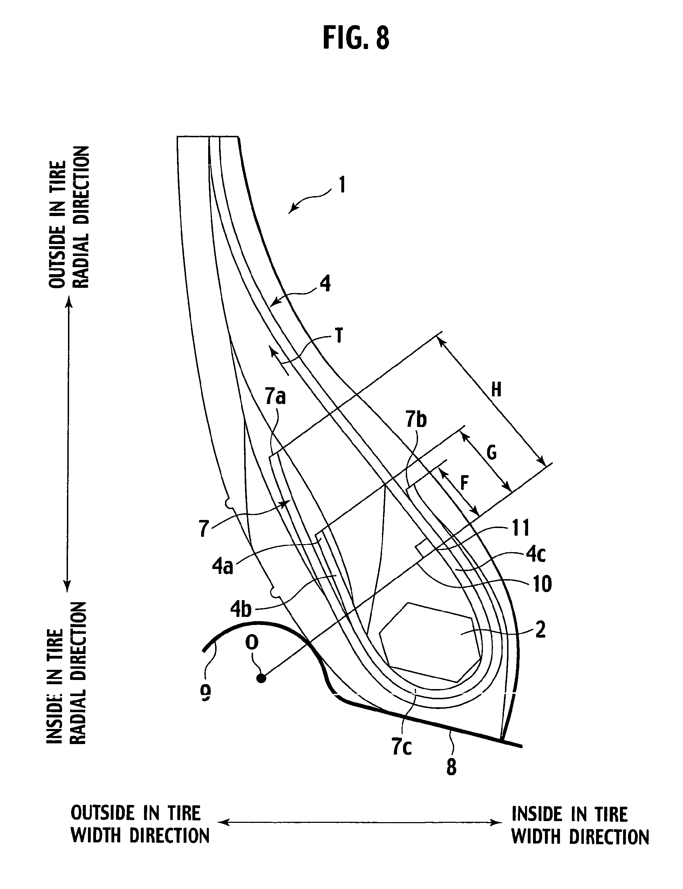

Moreover, as another embodiment of the present invention, as shown in FIG. 8, the distances from the normal 10 suspended from the curvature center O of the flange 9 to the inner portion 4c in the tire width direction of the carcass layer 4 may be set as: the outer end portion 7a in the tire width direction of the wire chafer 7 (H) > the folded end portion 4a of the carcass layer 4 (G) ≥ the inner end portion 7b in the tire width direction of the wire chafer 7 (F). This is because, in accordance with this embodiment, the distortion in the inner end portion 7b in the tire width direction of the wire chafer 7 can be suppressed.

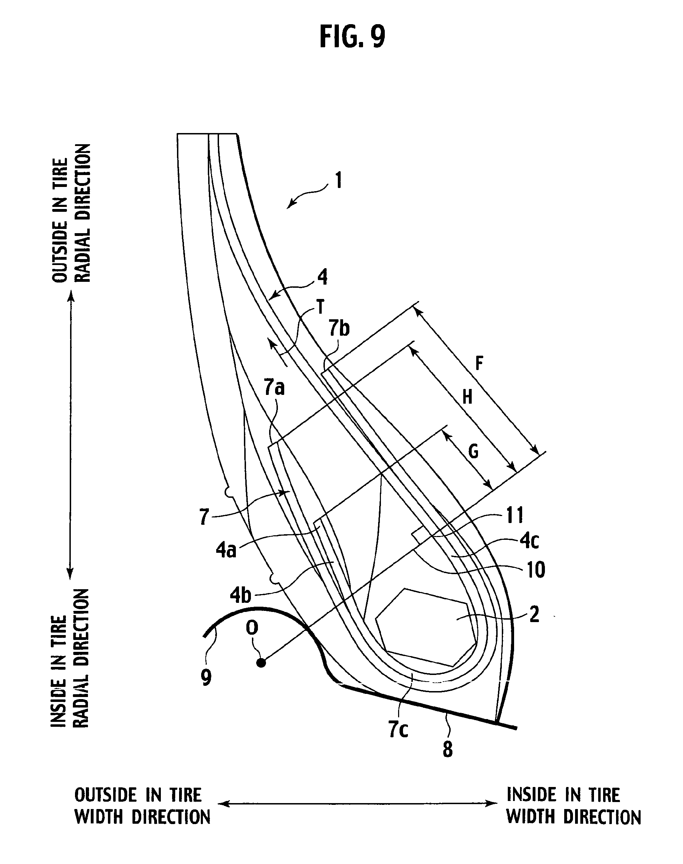

Furthermore, as still another embodiment of the present invention, as shown in FIG. 9, the distances from the normal 10 suspended from the curvature center O of the flange 9 to the inner portion 4c in the tire width direction of the carcass layer 4 may be set as: the inner end portion 7b in the tire width direction of the wire chafer 7 (F) ≥ the outer end portion 7a in the tire width direction of the wire chafer 7 (H) > the folded end portion 4a of the carcass layer 4 (G). In accordance with this embodiment, the distortion in the outer end portion 7a in the tire width direction of the wire chafer 7 is suppressed to a large extent, and the occurrence of the breakdown in the outer end portion 7a in the tire width direction of the tire chafer 7 is suppressed to a large extent.

### (Function/effect of pneumatic tire according to this embodiment)

In this embodiment, the folded end 4a of the carcass layer 4 is disposed in the inside in the tire radial direction more than the outer end portion 7a and the inner end portion 7b in the tire width direction of the wire chafer 7, and accordingly, the occurrence of the crack in the folded end 4a can be suppressed.

In this case, the crack occurs in the outer end portion 7a in the tire width direction of the wire chafer 7 in place of the folded end 4a of the carcass layer 4. However, rather than the folded end 4a, the cords of the outer end portion 7a and the inner end portion 7b in the tire width direction of the wire chafer 7 are inclined by 15° to 35° with respect to the tire circumferential direction, and accordingly, even if the tire 1 is applied with the load and is bent, the crack is less likely to occur from the outer end portion 7a in the tire width direction.

Moreover, also in the case where the crack occurs in the outer end portion 7a in the tire width direction, the crack occurs diagonally along the cords disposed at 15° to 35°, which compose the wire chafer 7, whereby the crack can be suppressed from growing linearly to the tire surface from the outer end 7a in the tire width direction, and as a result, the crack can be made less likely to appear on the tire surface.

Moreover, with regard to each cord composing the outer end portion 7b and the inner end portion 7c in the tire width direction of the wire chafer 7, the ratio of the interval between the adjacent cords with respect to the cord diameter is 0.6 or more to 1.6 or less, and the diameter of each cord is 0.7 mm or more to 1.5 mm or less. Accordingly, the crack that occurs in the outer end portion 7a in the tire width direction can be suppressed to the minimum while maintaining the strength of the cord itself.

Furthermore, with regard to each cord composing the outer end portion 7a and the inner end portion 7b in the tire width direction of the wire chafer 7, the ratio of the interval between the adjacent cords with respect to the cord diameter is 0.6 or more to 1.6 or less, and the interval between the cords is 0.7 to 2.0 mm. Accordingly, the crack that occurs in the outer end portion 7a in the tire width direction can be made to more surely go along with the cord 7A composing the wire chafer 7.

Moreover, the inner end portion 7b in the tire width direction of the wire chafer 7 is located on the outside in the tire width direction by the distance F from the intersection 11 of the normal 10 suspended from the curvature center O of the flange 9 of such a standard-equipped rim 8 to the inner portion 4c in the tire width direction of the carcass layer 4 and of the inner portion 4c in the tire width direction. Accordingly, the deformation around the bead core 2, which occurs as a result that the carcass layer 4 is going to come out in the direction of arrow T when an inner pressure/load are applied to the tire 1, can be suppressed.

Furthermore, the outer end portion 7a in the tire width direction of the wire chafer 7 is extended to the outside in the tire radial direction more than the folded end portion 4a of the carcass layer 4, and the inner end portion 7b in the tire width direction of the wire chafer 7 is located on the outside in the tire radial direction by the distance F from the intersection 11 of the normal 10 suspended from the curvature center O of the flange 9 of the rim 8 to the inner portion 4c in the tire width direction of the carcass layer 4 and of the inner portion 4c in the tire width direction. Accordingly, a highly durable bead structure can be realized.

### (Example)

A description will be made below in detail of examples of the pneumatic tire 1 according to the embodiment of the present invention.

A pneumatic tire (Example 1) was manufactured, in which the cord angle of the outer end portion 7a in the tire width direction of the wire chafer 7 with respect to the tire circumferential direction is 25°, the cord diameter is 0.86 mm, and the interval between the adjacent cords is 1.0 mm. Then, the durability in a bead portion of the pneumatic tire was investigated. Moreover, similar investigation was performed for the structures shown in FIG. 8 and FIG. 9, which were defined as Example 2 and Example 3, respectively.

Note that, for comparison, a pneumatic tire (Comparative example 1) was manufactured, in which, as a conventional structure, a distance from the normal 10 to the outer end portion 7a in the tire width direction of the wire chafer 7 is shorter than a distance from the normal 10 to the folded end 4a of the carcass layer 4, the cord angle of the outer end portion 7a in the tire width direction of the wire chafer 7 with respect to the tire circumferential direction is 25°, the cord diameter is 0.86 mm, and the interval between the adjacent cords is 1.0 mm. Then, the pneumatic tire was investigated under the same condition.

Moreover, for comparison, a pneumatic tire (Comparative example 2) was manufactured, in which the distance from the normal 10 to the outer end portion 7a in the tire width direction of the wire chafer 7 is longer than the distance from the normal 10 to the folded end 4a of the carcass layer 4, the cord angle of the outer end portion 7a in the tire width direction of the wire chafer 7 with respect to the tire circumferential direction is 25°, the cord diameter is 0.86 mm, the distance from the normal suspended from the curvature center O of the flange 9 to the inner portion in the tire width direction of the carcass layer is set as: the folded end portion (G) of the carcass layer 4 > the inner end portion in the tire width direction of the wire chafer (F), and the inner end portion 7b in the tire width direction is located in the inside in the tire radial direction more than the intersection 11. Then, the pneumatic tire was investigated under the same condition.

Moreover, a size of each pneumatic tire was 11R 22.5.

### <Durability in bead portion>

The pneumatic tires of Examples 1, 2 and 3 and Comparative examples 1 and 2, which are described above, were manufactured, were mounted on the drum with a diameter of 1.7 m, and were made to run at a speed of 60 km/h. Then, the running distances until the breakdown occurred were investigated, and obtained results were displayed as indices while taking, as 100, that of Example 1 when the tire was new. Note that larger numeric values of the indices indicate that the durability of each bead portion is higher.

**(Table 1)**

| | | Example 1 | Example 2 | Example 3 | Comparative example 1 | Comparative example 2 |
|---|---|---|---|---|---|---|
| Corresponding drawing | | Figure 1 | Figure 8 | Figure 9 | - | - |
| Cord angle with respect to tire circumferential direction (°) | | 25 | 25 | 25 | 25 | 25 |
| Cord diameter (mm) | | 0.86 | 0.86 | 0.86 | 0.86 | 0.86 |
| Cord interval (mm) | | 1 | 1 | 1 | 1 | 1 |
| Bead portion durability | When new | 100 | 90 | 110 | 80 | 70 |
| | After oxidation deterioration for 30 days | 100 | 90 | 110 | 50 | 70 |

From results of Table 1, it has been found out that, in each of Examples 1, 2 and 3, the durability in the bead portion was enhanced in comparison with Comparative examples 1 and 2 in both of the cases when each pneumatic tire was new and the case when each pneumatic tire was subjected to the oxidation deterioration for 30 days.

From this, it has been found out that the durability in the bead portion can be enhanced by the pneumatic tire as in each of Examples 1, 2 and 3.

## Claims

1. A pneumatic tire, comprising:
bead cores individually embedded in a pair of bead portions;
a carcass layer extended between the bead cores, in which a plurality of codes folded so as to be wound around the bead cores are coated with rubber; and
wire chafers provided on outsides of the carcass layer, in which a plurality of codes are coated with rubber,
wherein an outer end portion in a tire width direction of each of the wire chafers is extended to an outside in a tire radial direction more than each folded end portion of the carcass layer,
a shortest distance between centers of each cord of a folded portion of the carcass layer and each adjacent cord of the wire chafer to the cord of the folded portion is formed so as to be widened toward the outside in the tire radial direction, and
an inner end portion in the tire width direction of the wire chafer is located at a same position as an intersection of a normal suspended from a curvature center of a flange of a rim equipped as a standard to an inner portion in the tire width direction of the carcass layer and of the inner portion in the tire width direction, or located on an outside in the tire radial direction from the intersection.

2. The pneumatic tire according to claim 1, wherein the shortest distance between the centers of the cord of the folded end of the carcass layer and the cord of the wire chafer is 2 mm or more to 5 mm or less.

3. The pneumatic tire according to claim 1, wherein an angle of the tire outer end portion of the wire chafer with respect to a tire circumferential direction is smaller than an angle of an adjacent portion of the wire chafer to the bead core with respect to the tire circumferential direction.

4. The pneumatic tire according to claim 1, wherein the cord of the wire chafer, the cord being located on the outside in the tire radial direction more than the folded end portion of the carcass layer, forms an angle of 15° or more to 35° or less with respect to the tire circumferential direction, in which a ratio of an interval between the adjacent cords with respect to a diameter of the cords is 0.6 or more to 1.6 or less, the diameter of each cord is 0.7 mm or more to 1.5 mm or less, and the interval between the cords is 0.7 mm or more to 2.0 mm or less.

5. The pneumatic tire according to claim 1, wherein the cord of the adjacent portion of the wire chafer to the bead core forms an angle of 35° or more to 55° or less with respect to the tire circumferential direction, in which a ratio of an interval between the adjacent cords with respect to a diameter of the cords is 0.6 or more to 1.6 or less, the diameter of each cord is 0.7 mm or more to 1.5 mm or less, and the interval between the cords is 0.7 mm or more to 2.0 mm or less.

6. The pneumatic tire according to claim 1, wherein a ratio of a shortest distance between cord centers of the folded end of the carcass layer and the inner portion in the tire width direction of the carcass layer with respect to a shortest distance between cord centers of the outer end portion in the tire width direction of the wire chafer with respect to the inner portion in the tire width direction of the carcass layer is 100: 100±15.

7. The pneumatic tire according to claim 1, wherein the folded portion of the carcass layer is inclined in a reverse direction to the wire chafer adjacent thereto.

8. The pneumatic tire according to claim 1, wherein distances from the normal suspended from the curvature center of the flange of the rim equipped as the standard to the inner portion in the tire width direction of the carcass layer are set as: the outer end portion in the tire width direction of the wire chafer > the folded end portion of the carcass layer ≥ the inner end portion in the tire width direction of the wire chafer.

9. The pneumatic tire according to claim 1, wherein distances from the normal suspended from the curvature center of the flange of the rim equipped as the standard to the inner portion in the tire width direction of the carcass layer are set as: the outer end portion in the tire width direction of the wire chafer > the inner end portion in the tire width direction of the wire chafer ≥ the folded end portion of the carcass layer.

10. The pneumatic tire according to claim 1, wherein distances from the normal suspended from the curvature center of the flange of the rim equipped as the standard to the inner portion in the tire width direction of the carcass layer are set as: the inner end portion in the tire width direction of the wire chafer ≥ the outer end portion in the tire width direction of the wire chafer > the folded end portion of the carcass layer.
